Europäisches Patentamt

European Patent Office

Office européen des brevets

(19)

(11) Numéro de publication : **0 162 990**
**B1**

(12) **FASCICULE DE BREVET EUROPÉEN**

(45) Date de publication du fascicule du brevet :
15.06.88

(21) Numéro de dépôt : 84401953.9

(22) Date de dépôt : 28.09.84

(51) Int. Cl.⁴ : **G 01 D  5/247**, G 08 C  19/24

(54) Tête de mesure monovoie et installation de télémesure en comportant application.

(30) Priorité : 29.09.83 FR 8315513

(43) Date de publication de la demande :
04.12.85 Bulletin 85/49

(45) Mention de la délivrance du brevet :
15.06.88 Bulletin 88/24

(84) Etats contractants désignés :
BE CH DE GB IT LI NL SE

(56) Documents cités :
FR-A- 1 587 030
FR-A- 2 407 538

(73) Titulaire : **ELECTRICITE DE FRANCE Service National**
**2, rue Louis Murat**
**F-75008 Paris (FR)**

(72) Inventeur : **Combe, Michel**
**4, avenue d'Alsace Lorraine**
**F-92500 Rueil Malmaison (FR)**
Inventeur : **Alberola, Georges**
**28, rue des Fontaines Agnès**
**F-78520 Limay (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

L'invention concerne le domaine des installations de télémesure permettant de disposer, à distance, de la valeur d'un ou plusieurs paramètres captés sur un appareil ou une machine à essayer ou à surveiller.

Il existe déjà de nombreux systèmes de télémesure multivoies permettant de lire ou d'enregistrer à distance plusieurs paramètres prélevés à l'aide de capteurs. En contrepartie, ces systèmes comportent une tête de mesure complexe, encombrante et dont l'implantation sur une machine nécessite souvent une étude poussée et la réalisation de pièces onéreuses. C'est notamment le cas des télémesures sur machines tournantes, où les pièces de maintien de la tête doivent être rapportées sans apporter à l'arbre de la machine des modifications diminuant sa résistance mécanique, où le volume disponible est limité et où cependant il est souvent nécessaire d'offrir une résistance élevée aux accélérations. Au surplus, l'alimentation électrique de ces têtes exige la présence de conducteurs supplémentaires qui compliquent encore le problème, d'autant plus que la tête comporte fréquemment une partie analogique et une partie numérique, ce qui rend plusieurs alimentations nécessaires et amène à utiliser des tores pour la réalisation des transformateurs d'alimentation. La présence d'un champ magnétique important, qui se rencontre fréquemment dans les machines tournantes électriques, entraîne une saturation de ces tores et la perte des alimentations.

Bien souvent, les possibilités offertes par un système de télémesure multivoies sont inutiles et une installation monovoie serait suffisante pour répondre aux besoins, par exemple pour des interventions à effectuer rapidement, qui n'exigent que la mesure d'un seul paramètre.

On connait (document FR-A-1 587 030) une tête de mesure monovoie du type décrit dans le préambule de la revendication 1. Cette tête a notamment l'inconvénient d'exiger la transmission de deux couples de valeurs (une référence et une valeur de mesure) pour chaque mesure à transmettre. Elle a en conséquence une bande passante limitée et se prête notamment mal à des mesures de vibration.

L'invention vise à fournir une tête de mesure monovoie ayant une précision de mesure et une bande passante élevées, permettant un recalage de pleine échelle et un recalage de zéro, réalisable sous une forme simple et peu encombrante, ayant de faibles exigences en matières d'alimentation et permettant une mise en place rapide.

Dans ce but, l'invention propose une tête de télémesure monovoie du type défini par la revendication 1.

La faible consommation d'une telle tête, qui peut être réalisée en composants anologiques à faible consommation et en circuits logiques à transistors C-MOS, lui permet de fonctionner à partir d'une source d'alimentation unique de faibles tension et capacité, qui peut être une pile ou un accumulateur, sans utilisation de tores sensibles aux champs électromagnétiques élevés. La consommation très faible donne à la tête une grande autonomie. Le montage, étant à faible nombre de composants, peut être miniaturisé et son insertion à l'intérieur d'une machine se fait à faible prix, commodément et rapidement.

La valeur de mesure est représentée, après conversion, par l'intervalle de temps qui sépare le créneau représentatif de la référence basse du créneau représentatif de la mesure. Cet intervalle doit être rapporté à l'intervalle qui sépare les créneaux représentatifs du passage aux valeurs de référence basse et haute. Les modifications de l'intervalle entre passages de ces deux références reflètent les dérives du système et permettent, par traitement simple à la réception, d'effectuer des corrections, par exemple des variations du courant de charge du condensateur généralement utilisé dans le générateur de rampe, en fonction de la température.

Les créneaux seront généralement créés par des monostables placés en aval des comparateurs, la durée de maintien d'un des monostables étant différente des autres de façon à permettre d'identifier les créneaux à l'aide d'une logique à la réception.

L'invention propose dans un mode particulier de sa réalisation, une installation comportant une tête du genre ci-dessus défini et un ensemble de réception ayant un convertisseur de restitution à générateur de rampe, ou numérique, commandé par les créneaux provenant de la tête.

L'invention sera mieux comprise à la lecture de la description d'un mode particulier de réalisation, donné à titre d'exemple non limitatif. La description se réfère aux dessins qui l'accompagnent, dans lesquels :

— la Figure 1 est un schéma de principe de l'ensemble de l'installation,

— les Figures 2 à 6 sont des synoptiques montrant une constitution possible de l'alimentation, de l'amplificateur de mesure, du filtre, du convertisseur et de l'émetteur de la tête de l'installation de la Figure 1,

— la Figure 7 est un schéma montrant le mode de modulation en durée d'impulsion par le convertisseur.

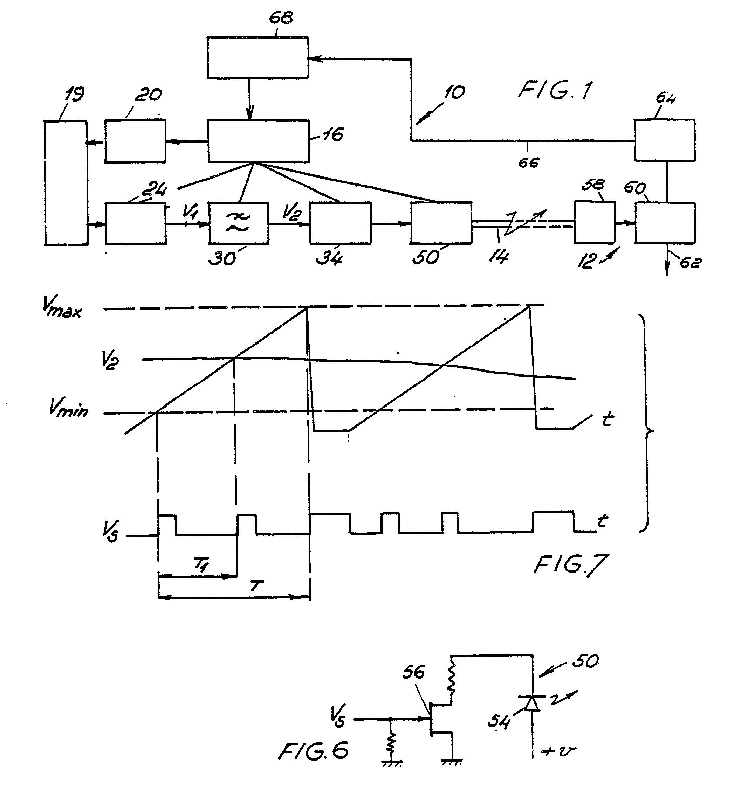

L'installation montrée en Figure 1 comporte une tête 10 portée par la machine dont un paramètre de fonctionnement est à mesurer et un récepteur 12 placé à distance et relié à la tête par un support de transmission 14.

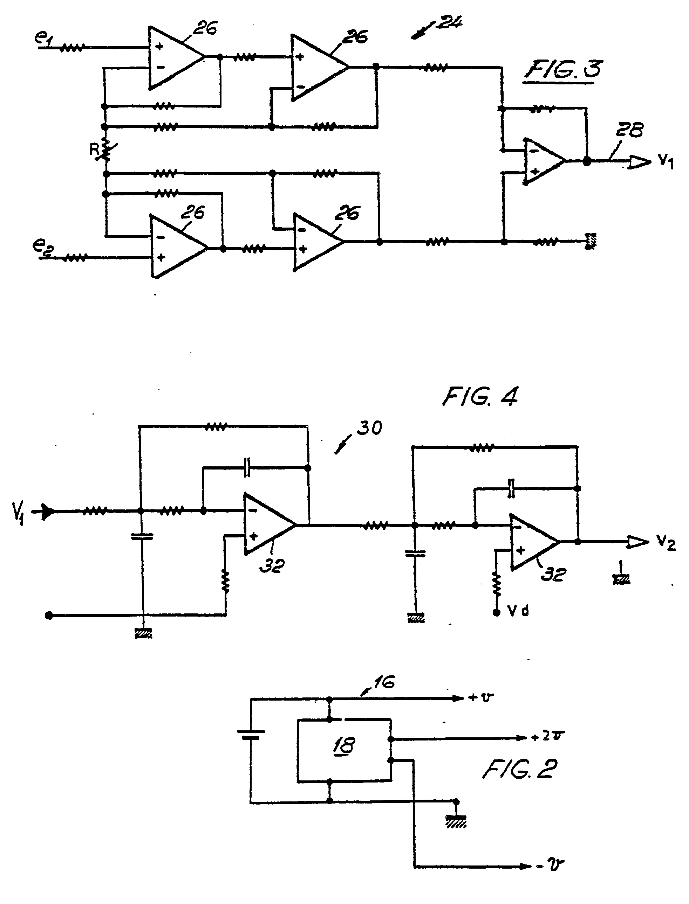

La tête 10 comporte une alimentation générale 16 (Figure 2) dont la source d'énergie peut être une pile fournissant une tension unique +v au moins égale à 3 Volts. Cette alimentation générale peut, tout en conservant une constitution simple et classique, comporter un convertisseur de tension 18 lui permettant de fournir les tension +v, −v et +2v. L'alimentation 16 fournit l'énergie nécessaire au capteur de mesure 19 par l'intermédiaire d'une alimentation 20. Dans un exemple représentatif, le capteur est constitué par un pont de jauges résistantes alimentées en 3 Volts, avec une consommation de l'ordre du mA.

L'amplificateur de mesure 24 sera généralement constitué d'amplificateurs opérationnels alimentés par des tensions +v et −v. Dans le cas montré en Figure 3, l'amplificateur 24, fournissant un gain d'environ 400, réglable à l'aide d'une résistance R, est constitué de cinq amplificateurs opérationnels 26 à très faible consommation. Le signal venant du capteur est appliqué entre les entrées $e_1$ et $e_2$ et ressort en 28 après amplification, avec une valeur $V_1$.

Le signal $V_1$ doit généralement être soumis à un filtrage passe-bas. Cette fonction est remplie, dans le cas montré en Figure 4, par un filtre 30 de type butterworth d'ordre 4, constitué de deux amplificateurs opérationnels 32 en cascade, présentant une fréquence de coupure de 4000 Hz.

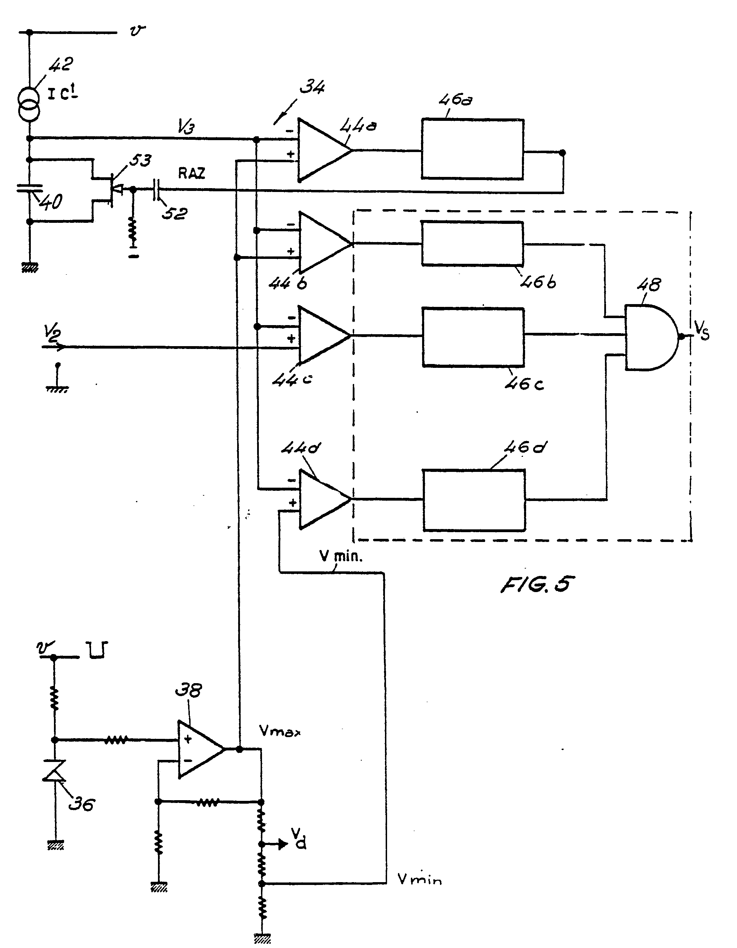

Le signal de sortie $V_2$ du filtre 30 attaque le convertisseur 34 prévu pour fournir un signal modulé en largeur d'impulsion et des références permettant de reconstituer le signal $V_2$. Le convertisseur 34 montré en Figure 5 comprend un circuit destiné à fournir les deux tensions de référence $V_{max}$ et $V_{min}$. Ce circuit comporte une diode zener 36 de stabilisation de la tension appliquée à un amplificateur opérationnel 38 qui attaque un pont de résistance faisant apparaître les deux tensions $V_{max}$ et $V_{min}$ ainsi qu'une tension intermédiaire $V_d$ dont le rôle apparaîtra plus loin.

La partie du convertisseur 34 destinée à former le signal modulé est constituée par un générateur de rampe déclenché et des canaux de comparaison et de formation de créneaux. Le générateur de rampe comprend un condensateur 40 chargé à courant constant par un générateur 42 de façon à faire apparaître une rampe de tension $V_3$ aux bornes du condensateur lorsque le transistor à effet de champ 53 autorise la charge. Cette tension est appliquée à quatre canaux constitués chacun par un comparateur 44a-d suivi d'un monostable 46a-d. Les secondes entrées des comparateurs 44b, 44c et 44d reçoivent respectivement les tensions $V_{max}$, $V_2$ et $V_{min}$. Leurs sorties sont reliées, par des monostables 46b, 46c et 46d et par une porte OU commune 48, à l'émetteur 50 sur support de transmission.

Ainsi, chaque passage de $V_3$ au-dessus d'une des valeurs $V_{min}$, $V_2$ et $V_{max}$ provoque l'émission d'un créneau par le monostable correspondant. Ce monostable et la porte OU 48 sont avantageusement alimentés par la tension +2v afin de fonctionner à vitesse élevée, ce qui fait gagner sur la consommation du système d'émission par raccourcissement de la durée des impulsions émises.

Le quatrième canal, dont le comparateur reçoit également la tension $V_{max}$, est destiné à assurer le retour à zéro. Le signal de sortie de son monostable 46a est appliqué, par l'intermédiaire d'un condensateur 52, au transistor à effet de champ 53 qui provoque la décharge du condensateur 40 et le maintient à zéro pendant toute la durée du créneau, après quoi le cycle reprend. Le signal de sortie $V_5$ a ainsi la forme montrée sur la seconde ligne de la Figure 7, dont la première ligne montre les passages de la rampe aux niveaux de tension $V_{min}$, $V_2$ et $V_{max}$. La durée $T_1$ est proportionnelle à la tension $V_2$ à l'entrée du convertisseur tandis que le temps T correspond à la pleine échelle. Le convertisseur peut être prévu pour effectuer une mesure toutes les 50µs, ce qui est compatible avec la bande passante de 4 kHz.

La tension de sortie $V_5$ est appliquée à l'émetteur 50 qui sera d'un type choisi en fonction du support de transmission 14. Dans le cas de télémesure sur organe statique et de transmission sur une longueur ne dépassant pas quelques dizaines de mètres, le support 14 peut être constitué par une fibre optique et, dans ce cas, on peut utiliser un émetteur 50 à diode électroluminescente 54 commandée par un transistor à effet de champ 56 (Figure 6). Si au contraire la mesure est à effectuer sur un organe mobile, par exemple un arbre rotatif, on pourra utiliser un émetteur haute fréquence ou tout autre émetteur n'utilisant pas un support de transmission matériel.

La tension intermédiaire ou de décalage $V_d$ permet de ramener la tension de sortie de l'amplificateur alimenté en ±v dans la gamme de mesure du convertisseur.

L'ensemble de réception 12 de l'installation comporte un récepteur 58 adapté au support de transmission 14 et un convertisseur 60 destiné à restituer, sur sa sortie 62, deux signaux de sortie analogiques, le premier représentatif de la mesure, le second représentatif de la référence haute. Il n'est pas nécessaire de décrire en détail le convertisseur 60, qui comportera une logique permettant de reconnaître, du fait de leur différence de longueur, les créneaux de référence basse, de mesure et de référence haute. Les valeurs de mesure et de référence haute sont stockées dans des échantillonneurs bloqueurs et une rampe est élaborée, à partir d'un générateur du même genre que celui du convertisseur 34, à partir du créneau de référence basse jusqu'au créneau de référence haute. Les signaux de sortie du convertisseur 60 peuvent être appliqués à un convertisseur analogique/numérique dont la pleine échelle correspond à la référence haute.

L'installation peut être prévue pour assurer une compensation en température. On sait en effet que les variations de température peuvent modifier la valeur du condensateur 40 du convertisseur 34, ainsi que son courant de charge I. Cette évolution se traduit par une variation de l'intervalle de temps séparant les créneaux de sortie des monostables 46d et 46b, intervalle représentant la pleine échelle de mesure. D'autre part, un étalonnage permet de déduire, à la réception, la température de la tête et, notamment, de l'amplificateur de mesure 24 grâce à la durée T. Cette dérive de décalage, étant connue, peut en conséquence être compensée de façon simple à la réception.

Le dispositif représenté en Figure 1 est complété par un système de télécommande à partir de l'ensemble de réception 12. Dans le cas où le support de transmission 14 est une fibre optique, la télécommande peut être assurée par un boîtier 64 comportant une diode électroluminescente qui émet sur une fibre optique 66. La tête comporte un récepteur de télécommande, dont l'organe d'entrée est par exemple un phototransistor, qui branche la source d'alimentation par exemple par l'intermédiaire d'un transistor VMOS, pendant la durée des signaux reçus du boîtier 64.

Un tel système de télécommande permet, dans le cas d'une alimentation par piles ou batterie de faible capacité, de n'alimenter le montage que pendant les périodes d'essais et, au cours de ces périodes, de faire des mesures espacées dans le temps avec une grande flexibilité.

A titre d'exemple, on peut indiquer qu'une tête de mesure à alimentation par une pile au lithium 3,4 Volts d'une capacité de 850 mAh a été réalisée en amplificateurs opérationnels de type OP 20 et transistors C-MOS. La dérive de décalage de l'amplificateur de mesure 24, d'environ 1,2 $\mu V/°C$ était déterminée par mesure de la durée T et corrigée à la réception. La transmission s'effectuait sur fibre optique, par impulsions brèves, de façon à réduire la consommation. La consommation totale de la tête, y compris le capteur, ne dépassait pas 4,5 mA.

L'invention est évidemment susceptible de nombreuses variantes de réalisation. En particulier, les corrections de dérive peuvent être effectuées de façon numérique à la réception, en incorporant un microprocesseur à l'ensemble de réception.

## Revendications

1. Tête de mesure monovoie, comprenant un capteur (19), des moyens d'amplification (24) et de filtrage (30) et un convertisseur (34) à modulation de durée et transmission de références hautes ($V_{max}$) et basses ($V_{min}$) permettant de reconstituer à la réception la valeur ($V_2$) du signal reçu par le convertisseur (34) ledit convertisseur (34) comprenant un générateur de rampe (40, 42, 52, 53) et deux comparateurs (44d, 44b) prévus pour déclencher chacun un créneau lorsque la rampe atteint respectivement et successivement une valeur ($V_{min}$) correspondant à une référence basse générée localement, et une valeur ($V_{max}$) correspondant à une référence haute également générée localement, et des moyens de comparaison (44c) prévus pour déclencher un créneau en rapport avec la valeur de mesure ($V_2$), caractérisé en ce que lesdits moyens de comparaison sont un seul et même comparateur (44c) prévu pour fournir le créneau en rapport avec la valeur de mesure ($V_2$) lorsque la rampe atteint ladite valeur de mesure ($V_2$), ce dernier créneau étant situé entre le créneau correspondant à la valeur basse de référence ($V_{min}$) et le créneau correspondant à la valeur haute de référence ($V_{max}$).

2. Tête de mesure selon la revendication 1, caractérisée en ce que les créneaux sont générés par des monostables (46b-d) commandés par lesdits comparateurs (44b-d), l'un des monostables (46b) fournissant un créneau de durée différente de celle des autres (46c-d) pour permettre d'identifier les créneaux.

3. Tête de mesure selon la revendication 1 ou 2, caractérisée en ce que le générateur de rampe (40, 42, 52, 53) comporte un condensateur (40) chargé à courant constant et muni de moyens interrupteurs (53) de remise à zéro en réponse au créneau représentatif du passage de la rampe à la référence haute ($V_{max}$).

4. Installation de télémesure comportant une tête de mesure (10) suivant l'une quelconque des revendications 1 à 3, caractérisée en ce qu'elle comprend un ensemble de réception (12) ayant un convertisseur de restitution (60) à générateur de rampe commandé par les créneaux correspondant aux références basse ($V_{min}$) et haute ($V_{max}$).

5. Installation selon la revendication 4, caractérisée en ce que l'ensemble de réception (12) comprend des moyens de détermination des dérives en température à partir de l'intervalle de temps (T) entre les créneaux correspondant aux références basse ($V_{min}$) et haute ($V_{max}$) et de correction de ces dérives.

6. Installation selon la revendication 4 ou 5, caractérisée en ce qu'elle comporte des moyens (64, 68) de télécommande à partir de l'ensemble de réception (12) permettant de couper et de mettre en service la source d'alimentation électrique (16) de la tête (10).

7. Installation selon l'une quelconque des revendications 4 ou 6, caractérisée en ce que la source d'alimentation (16) de la tête est constituée par une pile et en ce que la tête (10) est constituée de composants à faible consommation.

## Claims

1. A single channel measuring unit comprising a sensor (19), amplification (24) and filtering (30) means and a convertor with a duration and transmission modulation of high ($V_{max}$) and low ($V_{min}$) references enabling the value ($V_2$) of the signal received by the convertor (34) comprising a ramp generator (40, 42 50, 53) and two comparators (44d, 44b) provided for delivering each a square pulse when the ramp reaches respectively and successively a value ($V_{min}$) corresponding to a low reference locally generated, and a value ($V_{max}$) corresponding to a high reference equally locally generated, and means for comparison (44c) provided for delivering a square pulse related to the measured value ($V_2$) characterized in that said means for comparison are a sole and same comparator (44c) provided for delevering a square pulse related to the measured value ($V_2$) when the ramp reaches said measured value ($V_2$), said square pulse being located between the square pulse corresponding to the low value of reference ($V_{min}$) and the square pulse corresponding the high value of reference ($V_{max}$).

2. A measuring unit according to claim 1, characterized in that the square pulses are delivered by monostable flip-flops (46b-d) triggered by said comparators (44b-d), one of said monostable flip-flops (46b) delivering a square pulse having a duration different from the duration of the others (46c-d) for allowing an identification of the square pulses.

3. A measuring unit according to claims 1 or 2, characterized in that the ramp generator (40, 42, 52, 53) includes a capacitor (40) charged with a current of constant value and having switch means (53) for reset in response to a square pulse representative of the ramp passage at the high reference ($V_{max}$).

4. A remote metering apparatus having a measuring unit (10) according to anyone of the preceeding claims 1 to 3, characterized in that it comprises a reception unit (12) having a convertor for restitution (60) having a ramp generator controlled by the square pulse corresponding to the low reference value ($V_{min}$) and high reference value ($V_{max}$).

5. Apparatus according to claim 4 characterized in that the reception unit (12) comprises means for determining any shift due to temperature variations from measurement of the time interval (T) between the square pulses corresponding to low reference value ($V_{min}$) and high reference value ($V_{max}$) and for correcting such shifts.

6. Apparatus according to claim 4 or 5, characterized in that it comprises means (64, 68) for remote control from the reception unit (12) for switching on and off the electric power supply (7) of the measuring unit (10).

7. Apparatus according to anyone of claims 4 to 6, characterized in that the power supply (16) of the measuring unit is consisting of a battery and in that the measuring unit (10) is consisting of elements inducing a low consumption of current.

**Patentansprüche**

1. Einkanalmeßkopf, aufweisend einen Aufnehmer (19), Mittel zur Verstärkung (24) und zum Filtern (30) und einen Umsetzer (34) zur Modulation von Dauer und Übertragung hoher ($V_{max}$) und tiefer ($V_{min}$) Referenzen, die es gestatten, beim Empfang den Wert ($V_2$) des durch den Umsetzer (34) aufgenommenen Signals wiederherzustellen, wobei der Umsetzer (34) einen Rampengenerator (40, 42, 52, 53) und zwei Komparatoren (44d, 44b) aufweist, die jeweils zur Auslösung eines Auftastimpulses vorgesehen, sind, wenn die Rampe jeweils und sukzessive einen Wert ($V_{min}$) entsprechend einer lokal erzeugten tiefen Referenz und einen Wert ($V_{max}$) entsprechend einer ebenso lokal erzeugten hohen Referenz erreicht, und Vergleichsmittel (44c), die vorgesehen sind, um einen Auftastimpuls entsprechen mit dem Meßwert ($V_2$) auszulösen, dadurch gekennzeichnet, daß die Vergleichsmittel ein und derselbe Komparator (44c) sind, der vorgesehen ist, um den Auftastimpuls entsprechend mit dem Meßwert ($V_2$) zu liefern, wenn die Rampe den Meßwert ($V_2$) erreicht, wobei letzterer Auftastimpuls zwischen dem Auftastimpuls entsprechend dem tiefen Referenzwert ($V_{min}$) und dem Auftastimpuls entsprechend dem hohen, Referenzwert ($V_{max}$) liegt.

2. Meßkopf nach Anspruch 1, dadurch gekennzeichnet, daß die Auftastimpulse durch durch die Komparatoren (44b bis d) gesteuerte Monostabile (46b bis d) erzeugt werden, wobei einer der Monostabilen (46b) einen Auftastimpuls mit unterschiedlicher Dauer zu derjenigen der anderen (46c bis d) liefert, um die Identifizierung der Auftastimpulse zu gestatten.

3. Meßkopf nach Anspruch 1 oder 2, dadurch gekennzeichnet, daß der Rampengenerator (40, 42, 52, 53) einen Kondensator (40) umfaßt, der mit Gleichstrom aufgeladen wird und mit Schaltermitteln (53) zum Rückstellen auf Null ansprechend auf den repräsentativen Auftastimpuls des Durchlaufs der Rampe mit der hohen Referenz ($V_{max}$) versehen ist.

4. Fernübertragungsanlage, umfassend einen Meßkopf (10) nach einem beliebigen der Ansprüche 1 bis 3, dadurch gekennzeichnet, daß sie eine Empfangseinheit (12) aufweist, die einen Wiedergabeumsetzer (60) mit Rampengenerator besitzt, der durch die Auftastimpulse entsprechend den tiefen ($V_{min}$) und hohen ($V_{max}$) Referenzen gesteuert ist.

5. Anlage nach Anspruch 4, dadurch gekennzeichnet, daß die Empfängereinheit (12) Mittel zur Bestimmung der Temperaturdriften von dem Zeitintervall (T) an zwischen den Auftastimpulsen entsprechend den tiefen ($V_{min}$) und hohen ($V_{max}$) Referenzen und zur Korrektur dieser Driften aufweist.

6. Anlage nach Anspruch 4 oder 5, dadurch gekennzeichnet, daß sie Mittel (64, 68) zur Fernsteuerung ausgehend von der Empfängereinheit (12) umfaßt, die es gestatten, die elektrische Versorgungsquelle (16) des Kopfes (10) auszuschalten und in Betrieb zu setzen.

7. Anlage nach einem beliebigen der Ansprüche 4 oder 6, dadurch gekennzeichnet, daß die Versorgungsquelle (16) des Kopfes durch eine Batterie gebildet ist und daß der Kopf (10) aus Bauteilen mit geringem Verbrauch gebildet ist.

FIG.1

FIG.7

FIG.6

0 162 990

FIG.3

FIG. 4

FIG. 2

2

FIG. 5